# EUROPEAN PATENT APPLICATION

(11) **EP 4 643 686 A1**
(43) Date of publication of application: **05.11.2025**
(21) Application number: 23910085.2
(22) Date of filing: 12.12.2023
(51) Int. Cl.: A24F 40/57, A24F 47/00, G05D 23/20

(54) **AEROSOL GENERATION SYSTEM AND HEATING CONTROL METHOD THEREFOR**

(30) Priority: 30.12.2022 CN 202211726648
(71) Applicant: Shenzhen Huabao Collaborative Innovation Technology Research Institute Co. Ltd, Shenzhen, Guangdong 518133 (CN)
(72) Inventor: CHEN, Zhengxi, Shenzhen, Guangdong 518133 (CN)
(74) Representative: Herrero & Asociados, S.L.
(86) International application number: PCT/CN2023/138085
(87) International publication number: WO 2024/140155

(57) **Abstract**

The application provides an aerosol generation system and a heating control method thereof. The mothod comprises: detecting an initial temperature of a heating module; acquiring a first pre-stored parameter according to the initial temperature, and acquiring a second pre-stored parameter according to a preset heat preservation duration; acquiring a first temperature according to the first pre-stored parameter and a preset expected temperature; acquiring a second temperature according to the first temperature and the second pre-stored parameter; and controlling the heating module to work, and controlling the temperature of the heating module to gradually decrease when the temperature of the heating module reaches the first temperature, enabling the temperature of the heating module to reach the second temperature after the heat preservation duration. The hysteresis of temperature change can be overcome by controlling the heating module, allowing the temperature of air at the end of cigarette body to remain constant, increasing the taste when inhaled by the user.

## Description

### Technical field

The application relates to the technical field of aerosol generation, in particular to an aerosol generation system and a heating control method thereof.

### Background

The aerosol generation system typically consists of an aerosol generation device and an aerosol generation product. To generate aerosol for users to inhale, the aerosol generation product is inserted into the aerosol generation device, and the aerosol generation product is heated by the heating module of the aerosol generation device. For the existing aerosol generation device that uses an air heating method, the heating module does not directly heat the aerosol generation product, but rather heats the surrounding air, thus the aerosol generation product is heated via high-temperature air. When used, the generated aerosol is inhaled with high-temperature air, and there is a certain distance between the heating module of the aerosol generation device and the aerosol generation product. However, when controlling the temperature of the heating device, the resistance value of the heating element of the heating module is generally detected. The temperature is controlled using TCR (Temperature Coefficient of Resistance), which reflects the relative change in resistance value when the temperature changes by 1°C. As a result, there is a temperature difference between the heating element of the aerosol generation device and the temperature of the heated aerosol generation product, as well as a lag in the conduction of heat from the heating element to the aerosol generation product, resulting in inaccurate temperature control and affecting the taste when inhaled by the user.

### Summary of the invention

The application provides an aerosol generation system and a heating control method, with the goal of addressing the shortcomings of the prior art, namely that the temperature management of the present electronic cigarette is imprecise during the heat preservation stage.

To address the aforementioned issues, the first aspect of an embodiment of the application provides a heating control method of an aerosol generation system, which includes the following steps:
detecting an initial temperature of a heating module;
acquiring a first pre-stored parameter according to the initial temperature, and acquiring a second pre-stored parameter according to a preset heat preservation duration;
acquiring a first temperature according to the first pre-stored parameter and a preset expected temperature;
acquiring a second temperature according to the first temperature and the second pre-stored parameter; and
controlling the heating module to work, and controlling the temperature of the heating module to gradually decrease when the temperature of the heating module reaches the first temperature, enabling the temperature of the heating module to reach the second temperature after the heat preservation duration.

In an alternative embodiment, the first pre-stored parameter includes a first compensation coefficient, and the method for acquiring the first compensation coefficient includes:
recording the initial temperature and controlling the heating module to work for a first preset duration, the first preset duration is less than 20 seconds;
acquiring a temperature of a preset area and setting the temperature as a first detection temperature; and
acquiring the first compensation coefficient according to the expected temperature and the first detection temperature.

In an alternative embodiment, the first pre-stored parameter further includes a second compensation coefficient, and the method for acquiring the second compensation coefficient includes:
controlling the heating module to work for a second preset duration, the second preset duration is more than 5 minutes;
acquiring the temperature of the preset area and setting the temperature as a second detection temperature; and
acquiring the second compensation coefficient according to the expected temperature and the second detection temperature.

In an alternative embodiment, the first pre-stored parameter further includes a third compensation coefficient, and the method for acquiring the third compensation coefficient includes:
recording a current time "t11", and controlling the heat module to work;
when the temperature of the heating module reaches the expected temperature, recording a current time "t12";
controlling the heating module to stop working when the temperature of the heating module reaches the expected temperature;
monitoring the temperature of a target area, and recording the current time "t13" when the target area reaches a maximum value; and
acquiring the third compensation coefficient according to a second detection duration and a first detection duration, and the first detection duration is t12-t11, the second detection duration is t13-t11.

In an alternative embodiment, the first pre-stored parameter is equal to the product of the first compensation coefficient, the second compensation coefficient and the third compensation coefficient.

In a second aspect of an embodiment of the present application, an aerosol generation system is provided, including:
a detection module, configured for detecting an initial temperature of a heating module;
an acquisition module, configured for acquiring a first pre-stored parameter according to the initial temperature and a second pre-stored parameter according to a preset heat preservation duration;
a calculation module, configured for acquiring a first temperature according to the first pre-stored parameter and a preset expected temperature, and acquiring a second temperature according to the first temperature and the second pre-stored parameter; and
a control module, configured for controlling the heating module to work, and controlling the temperature of the heating module to gradually decrease when the temperature of the heating module reaches the first temperature, enabling the temperature of the heating module to reach the second temperature after the heat preservation duration.

In an alternative embodiment, the first pre-stored parameter includes a first compensation coefficient, the aerosol generation system further includes a first acquisition method for acquiring the first compensation coefficient, and the first acquisition method is used for:
recording the initial temperature and controlling the heating module to work for a first preset duration, the first preset duration is less than 20 seconds; acquiring a temperature of a preset area and setting the temperature as a first detection temperature; and acquiring the first compensation coefficient according to the expected temperature and the first detection temperature.

In an alternative embodiment, the first pre-stored parameter further includes a second compensation coefficient, the aerosol generation system further includes a second acquisition method for acquiring the second compensation coefficient, and the second acquisition method is used for:
controlling the heating module to work for a second preset duration, the second preset duration is more than 5 minutes; acquiring the temperature of the preset area and setting the temperature as a second detection temperature; and acquiring the second compensation coefficient according to the expected temperature and the second detection temperature.

In an alternative embodiment, the first pre-stored parameter further includes a third compensation coefficient, the aerosol generation system further includes a third acquisition method for acquiring the third compensation coefficient, and the third acquisition method is used for:
recording a current time "t11", and controlling the heat module to work; when the temperature of the heating module reaches the expected temperature, recording a current time "t12"; controlling the heating module to stop working when the temperature of the heating module reaches the expected temperature; monitoring the temperature of a target area, and recording the current time "t13" when the target area reaches a maximum value; and acquiring the third compensation coefficient according to a second detection duration and a first detection duration, and the first detection duration is t12-t11, the second detection duration is t13-t11; and
the first pre-stored parameter is equal to the product of the first compensation coefficient, the second compensation coefficient and the third compensation coefficient.

The application has the following beneficial effects.

With the heating module, the heating module is controlled according to the first temperature, and when it reaches the first temperature, the heating module is controlled according to the second temperature and the preset heat preservation duration, thereby resolving temperature change hysteresis, keeping the temperature of air at the tail end of cigarette body constant, and improving the taste when inhaled by users.

### Brief description of the drawings

In order to explain the technical solution of the embodiments of this application more clearly, the drawings described in the description of the embodiments of this application will be briefly introduced below. It should be understood that, the drawings in the present application and their accompanying detailed description are directed to merely exemplary embodiments of the application, and should not be considered as limiting the scope. For those of ordinary skill in this field, other drawings may be obtained according to these drawings without any creative effort.
Fig. 1 shows a cross-sectional schematic structure of a heating module in an aerosol generation system.
Fig. 2 shows the temperature curves of the heating conductor and the target area when the TCR of the heating conductor is used for temperature control.
Fig. 3 shows a flowchart of a heating control method of an aerosol generation system.
Fig. 4 shows the temperature curves of the heating conductor and the target area when the temperature is controlled by a heating control method of an aerosol generation system.
Fig. 5 shows a structural diagram of an aerosol generation system.

Reference signs in the drawings are as follows.
1-Cigarette body; 2-Support member; 3-Target area; 4-Lead wire; 5-Ceramic body;
110-Detection module; 210-Acquisition module; 310-Calculation module; 410-Control module.

### Detailed description of preferred embodiments

The technical solutions in the embodiments of the present application will be clearly and completely described below with reference to the drawings in the embodiments of this application. Obviously, the described embodiments are merely part of the embodiments of this application, not all of them. Based on the embodiments in this application, all other embodiments obtained by those of ordinary skill in the art without creative effort belong to the protection scope of this application.

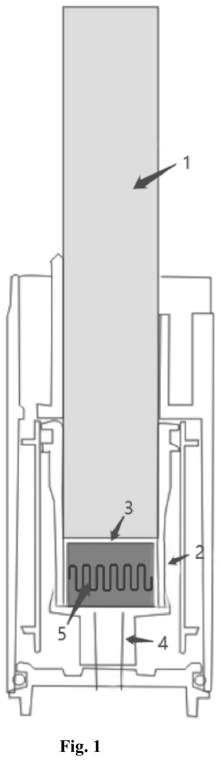

As shown in Fig. 1, it is a schematic structural diagram of an electronic cigarette.

When the electronic cigarette works, the heating module is energized, and the strip-shaped heating conductor in the heating module heats, thereby heating the honeycomb-shaped ceramic body 5. The air inside the honeycomb-shaped ceramic body 5 is heated, the hot air flows to the tail end of the cigarette body 1, and the cigarette body 1 is heated to generate aerosol.

The heating module includes a strip-shaped heating conductor and a honeycomb-shaped ceramic body 5. The lead wire 4 is electrically connected with the heating conductor through an air passage inside the electronic cigarette.

During the heating and temperature transfer procedure, the heating conductor is electrified to heat first. The heating conductor transmits the temperature to the ceramic body 5; The cold air flowing through the ceramic body 5 is heated to produce hot air. The hot air reaches the preset area (the tail end of the cigarette body 1) and heats it.

The heating module itself has a large mass. When the heating module is heated, the support member 2 of the electronic cigarette contacts the heating module, and the heating module would absorb a certain amount of heat.

A heat preservation component is arranged around the heating module, which has certain heat preservation capabilities. When the heating module stops heating, the temperature would drop slowly.

As shown in Fig. 1, the preset area (that is, the tail end of cigarette body 1) is the target area 3 for temperature control. Inaccurate temperature control in the preset area would result in poor taste.

Because the TCR of the heating conductor itself is adopted to control the temperature, there is a significant temperature difference between the heating conductor and the target area 3, resulting in lag.

"The TCR of the heating conductor itself is adopted to control the temperature" refers to: controlling the temperature by changing its own resistance, and it is required to determine the resistance of the heating conductor at the reference temperature (25°C) and its own TCR value (TCR is the abbreviation of temperature coefficient of resistance, indicating the relative change of resistance when the temperature changes by 1°C).

T=(Rt-R0)*(R0*TCR)-25 °C ............ Formula (1);

R0: resistance of heating conductor at reference temperature (25°C);
Rt: target resistance;
T: temperature rise of heating conductor.

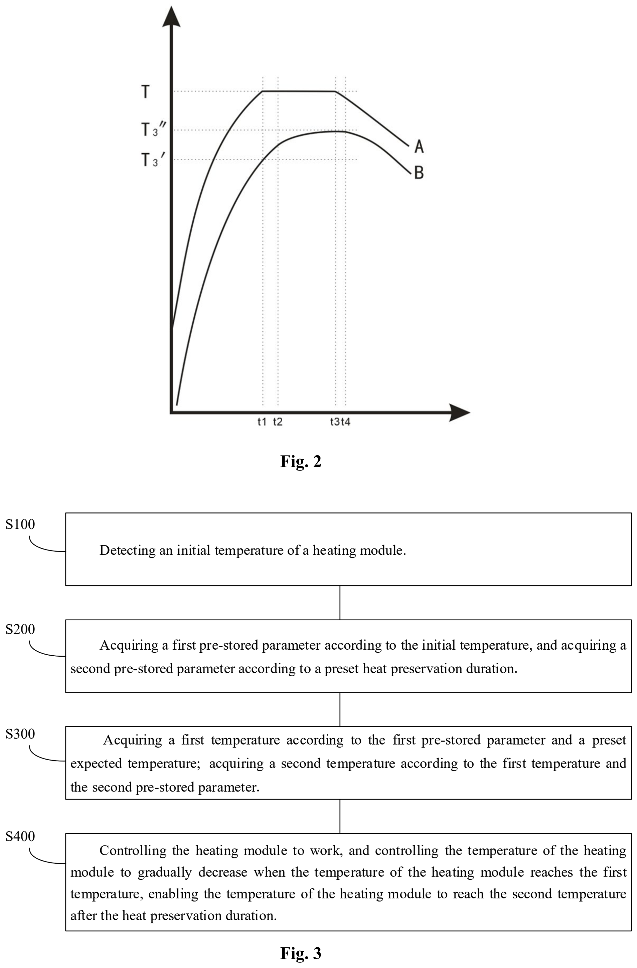

As shown in Fig. 2, curve A (temperature of heating conductor) is a general current preheating curve, with time on the abscissa and temperature converted by TCR on the ordinate. 0-t1 is the rapid heating stage, and t1-t3 is the heat preservation stage after reaching the preset temperature. T is the target preheating temperature, T3' is the temperature of the target area 3 after reaching the target preheating temperature, and T3" is the temperature of the target area 3 after preheating.

After the power is turned on, the heating conductor starts to heat. After time "t1", it reaches the set temperature T, and then it starts to keep the temperature at time "t3". After preheating, the temperature starts to drop.

Curve B represents the temperature curve for the target area 3. From t3 and t4, it is clear that the temperature of the target area 3 does not drop immediately after the temperature of the heating conductor drops, and there is a noticeable lag, usually greater than 3 seconds. From t3 to t1, the temperature of the heating conductor remains constant, whereas the temperature of the target area 3 follows a growth curve and gradually increases. The heating conductor reaches the maximum preheating temperature "T" at time t1, but the temperature in the target area 3 reaches T3' due to heat dissipation and hysteresis. At time t3 when the heat preservation process ends, the temperature of the heating conductor is still T, but the temperature in the target area 3 approaches T3".

When the cooler is started (that is, the temperature of the heating module is the same as the room temperature), T3' and T3" would remain low due to heat dissipation.

### Embodiments

To address the issue that the temperature of the target area 3 is unstable due to the temperature delay caused by using the TCR of the heating conductor, as shown in Fig. 3, this embodiment proposes a heating control method of an aerosol generation system that includes the following steps:
S100: detecting an initial temperature of a heating module.
S200: acquiring a first pre-stored parameter according to the initial temperature, and acquiring a second pre-stored parameter according to a preset heat preservation duration.
S300: acquiring a first temperature according to the first pre-stored parameter and a preset expected temperature; acquiring a second temperature according to the first temperature and the second pre-stored parameter.
S400: controlling the heating module to work, and controlling the temperature of the heating module to gradually decrease when the temperature of the heating module reaches the first temperature, enabling the temperature of the heating module to reach the second temperature after the heat preservation duration.

In step S100, the initial temperature of the heating module is actually the initial problem of the heating conductor.

After the temperature "T" is calculated accord to the formula (1), the temperature "T" adjusted for the temperature "T" is the preset expected temperature.

In step S300, the first temperature is equal to the product of the first pre-stored parameter and the expected temperature, and the second temperature is equal to the product of the second pre-stored parameter and the first temperature.

Different e-cigarettes require varying heat preservation durations when they leave the factory for different users. Because the heat preservation durations fluctuate, temperature compensation should be adjusted accordingly. In this embodiment, to obtain the second pre-stored parameter, the following actions may be performed:
electrifying the heating module to heat the heat module;
when the temperature of the heating module reaches the expected temperature, keeping the temperature of the heating module at the temperature "T" for a certain time, which is less than 20 seconds, by controlling current;
after the heat preservation, the difference between the temperature value calculated by TCR and the actual temperature of the target area 3 is also different. At this time, the heating element is driven to the target temperature, and the temperature is preserved for time "t", the temperature difference is recorded to solve the second pre-stored parameter, and the second pre-stored parameter is stored in the memory.

Because the initial temperature of the heating module is different, in this embodiment, the first pre-stored parameter includes a first compensation coefficient, and the method for acquiring the first compensation coefficient includes:
recording the initial temperature and controlling the heating module to work for a first preset duration, the first preset duration is less than 20 seconds;
acquiring a temperature of a preset area and setting the temperature as a first detection temperature; and
acquiring the first compensation coefficient according to the expected temperature and the first detection temperature.

The first compensation coefficient corresponds to the initial temperature of the heating module one by one. The first compensation coefficient differs depending on the initial temperature. The first compensation coefficient can be obtained by experiment and calculation according to the above way, and the corresponding relationship and numerical value between the first compensation coefficient and the initial temperature can be stored in the memory of the electronic cigarette.

Different types of electronic cigarettes have different parameter information such as the material of the support member and the mass of the heating module. For this reason, in this embodiment, the first pre-stored parameter further includes a second compensation coefficient, wherein the method for acquiring the second compensation coefficient includes:
controlling the heating module to work for a second preset duration, the second preset duration is more than 5 minutes;
acquiring the temperature of the preset area and setting the temperature as a second detection temperature; and
acquiring the second compensation coefficient according to the expected temperature and the second detection temperature.

The second compensation coefficient is related to the material of the support member and the mass of the heating module, and the corresponding second compensation coefficient is the same for the same type of electronic cigarette. The second compensation coefficient can be stored in the memory of the electronic cigarette.

Different types of electronic cigarettes have different lengths of heat transfer paths, and the time required for cold air to flow through the ceramic body 5 is different, which leads to the hysteresis of temperature transfer. Therefore, in this embodiment, the first pre-stored parameter also includes a third compensation coefficient, and the method for acquiring the third compensation coefficient includes:
recording a current time "t11", and controlling the heat module to work;
controlling the heating module to stop working when the temperature of the heating module reaches the expected temperature;
controlling the heating module to stop working when the temperature of the heating module reaches the expected temperature;
monitoring the temperature of a target area, and recording the current time "t13" when the target area reaches a maximum value; and
acquiring the third compensation coefficient according to a second detection duration and a first detection duration, and the first detection duration is t12-t11, the second detection duration is t13-t11.

The third compensation coefficient is related to the rated length of the heat transfer path, and the corresponding third compensation coefficient is the same for the same type of electronic cigarette. The third compensation coefficient can be stored in the memory of the electronic cigarette.

In this embodiment, the first pre-stored parameter is equal to the product of the first compensation coefficient, the second compensation coefficient and the third compensation coefficient.

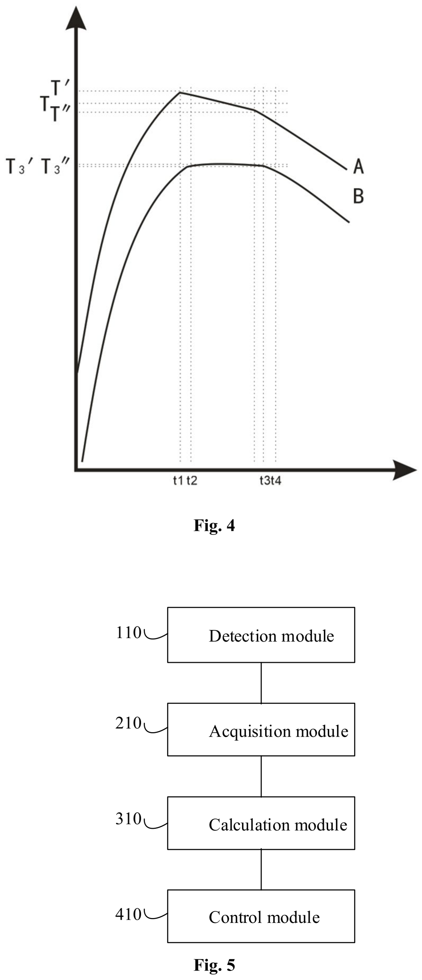

Take the start of cooler as an example. As shown in Fig. 4, when the cooler reaches the target temperature "T", the temperature T3' in the target area 3 is low, so each compensation coefficient causes T' to rise, and T3' rises accordingly. During heat preservation, because of the temperature lag, the temperature T3" at three places gradually increases, so the effect of compensation of various parameters enables T" to decrease, and T3" decreases accordingly. The final result is that the temperature of the target area 3 is compensated after the temperature calculated by TCR reaches the target temperature, and the temperature of the target area 3 is stable in the heat preservation stage.

According to the above heating control method, as shown in Fig. 5, in this embodiment, an aerosol generation system is also provided, including:
a detection module 110, configured for detecting an initial temperature of a heating module;
an acquisition module 210, configured for acquiring a first pre-stored parameter according to the initial temperature and a second pre-stored parameter according to a preset heat preservation duration;
a calculation module 310, configured for acquiring a first temperature according to the first pre-stored parameter and a preset expected temperature 310, and acquiring a second temperature according to the first temperature and the second pre-stored parameter; and
a control module 410, configured for controlling the heating module to work, and controlling the temperature of the heating module to gradually decrease when the temperature of the heating module reaches the first temperature, enabling the temperature of the heating module to reach the second temperature after the heat preservation duration.

In this embodiment, the first temperature is equal to the product of the first pre-stored parameter and the expected temperature, and the second temperature is equal to the product of the second pre-stored parameter and the first temperature.

Furthermore, the first pre-stored parameter includes a first compensation coefficient, and the aerosol generation system further includes a first acquisition method for acquiring the first compensation coefficient. The first acquisition method is used for:
recording the initial temperature and controlling the heating module to work for a first preset duration, the first preset duration is less than 20 seconds; acquiring a temperature of a preset area and setting the temperature as a first detection temperature; and acquiring the first compensation coefficient according to the expected temperature and the first detection temperature.

Furthermore, the first pre-stored parameter also includes a second compensation coefficient, and the aerosol generation system further includes a second acquisition method for acquiring the second compensation coefficient. The second acquisition method is used for:
controlling the heating module to work for a second preset duration, the second preset duration is more than 5 minutes; acquiring the temperature of the preset area and setting the temperature as a second detection temperature; and acquiring the second compensation coefficient according to the expected temperature and the second detection temperature.

Furthermore, the first pre-stored parameter also includes a third compensation coefficient, and the aerosol generation system further includes a third acquisition method for acquiring the third compensation coefficient. The third acquisition method is used for:
recording a current time "t11", and controlling the heat module to work; when the temperature of the heating module reaches the expected temperature, recording a current time "t12"; controlling the heating module to stop working when the temperature of the heating module reaches the expected temperature; monitoring the temperature of a target area, and recording the current time "t13" when the target area reaches a maximum value; and acquiring the third compensation coefficient according to a second detection duration and a first detection duration, and the first detection duration is t12-t11, the second detection duration is t13-t11.

In this embodiment, the first pre-stored parameter is equal to the product of the first compensation coefficient, the second compensation coefficient and the third compensation coefficient.

In this embodiment, a readable storage medium is provided, the readable storage medium stores a computer program, and the computer program, when run by a processor, realizes the above-described heating control method.

In this embodiment, the present application further provides an electronic cigarette, which includes a memory, a memory, a processor, and a computer program stored in the memory and executed by the processor; when the processor executes the computer program, the heating control method described above is realized.

The terms "first", "second", and so on (if any) in the specification and claims of this application, as well as the drawings, are intended to identify similar features rather than to define a specific order or sequence. It should be appreciated that the data so used can be interchanged in appropriate conditions, allowing the embodiments described herein to be implemented in different orders than those illustrated or described herein. Furthermore, the terms "comprise" and "include" and their derivatives relate to inclusive or open-ended scope and do not exclude additional, unrecited elements. For example, a process, method, system, product, or equipment that comprises a sequence of steps or units is not limited to those specifically specified, but may also include other steps or units that are not explicitly listed or are inherent in such processes, methods, products, or equipment.

## Claims

1. A heating control method of an aerosol generation system, comprising:
detecting an initial temperature of a heating module;
acquiring a first pre-stored parameter according to the initial temperature, and acquiring a second pre-stored parameter according to a preset heat preservation duration;
acquiring a first temperature according to the first pre-stored parameter and a preset expected temperature;
acquiring a second temperature according to the first temperature and the second pre-stored parameter; and
controlling the heating module to work, and controlling the temperature of the heating module to gradually decrease when the temperature of the heating module reaches the first temperature, enabling the temperature of the heating module to reach the second temperature after the heat preservation duration.

2. The heating control method of an aerosol generation system of claim 1, wherein the first pre-stored parameter comprises a first compensation coefficient, and the method for acquiring the first compensation coefficient comprises:
recording the initial temperature and controlling the heating module to work for a first preset duration, the first preset duration is less than 20 seconds;
acquiring a temperature of a preset area and setting the temperature as a first detection temperature; and
acquiring the first compensation coefficient according to the expected temperature and the first detection temperature.

3. The heating control method of an aerosol generation system of claim 2, wherein the first pre-stored parameter further comprises a second compensation coefficient, and the method for acquiring the second compensation coefficient comprises:
controlling the heating module to work for a second preset duration, the second preset duration is more than 5 minutes;
acquiring the temperature of the preset area and setting the temperature as a second detection temperature; and
acquiring the second compensation coefficient according to the expected temperature and the second detection temperature.

4. The heating control method of an aerosol generation system of claim 3, wherein the first pre-stored parameter further comprises a third compensation coefficient, and the method for acquiring the third compensation coefficient comprises:
recording a current time "t11", and controlling the heat module to work;
when the temperature of the heating module reaches the expected temperature, recording a current time "t12";
controlling the heating module to stop working when the temperature of the heating module reaches the expected temperature;
monitoring the temperature of a target area, and recording the current time "t13" when the target area reaches a maximum value; and
acquiring the third compensation coefficient according to a second detection duration and a first detection duration, wherein the first detection duration is t12-t11, the second detection duration is t13-t11.

5. The heating control method of an aerosol generation system of claim 4, wherein the first pre-stored parameter is equal to the product of the first compensation coefficient, the second compensation coefficient and the third compensation coefficient.

6. An aerosol generation system, comprising:
a detection module, configured for detecting an initial temperature of a heating module;
an acquisition module, configured for acquiring a first pre-stored parameter according to the initial temperature and a second pre-stored parameter according to a preset heat preservation duration;
a calculation module, configured for acquiring a first temperature according to the first pre-stored parameter and a preset expected temperature, and acquiring a second temperature according to the first temperature and the second pre-stored parameter; and
a control module, configured for controlling the heating module to work, and controlling the temperature of the heating module to gradually decrease when the temperature of the heating module reaches the first temperature, enabling the temperature of the heating module to reach the second temperature after the heat preservation duration.

7. The aerosol generation system of claim 6, wherein the first pre-stored parameter comprises a first compensation coefficient, the aerosol generation system further comprises a first acquisition method for acquiring the first compensation coefficient, and the first acquisition method is used for:
recording the initial temperature and controlling the heating module to work for a first preset duration, the first preset duration is less than 20 seconds; acquiring a temperature of a preset area and setting the temperature as a first detection temperature; and acquiring the first compensation coefficient according to the expected temperature and the first detection temperature.

8. The aerosol generation system of claim 7, wherein the first pre-stored parameter further comprises a second compensation coefficient, the aerosol generation system further comprises a second acquisition method for acquiring the second compensation coefficient, and the second acquisition method is used for:
controlling the heating module to work for a second preset duration, the second preset duration is more than 5 minutes; acquiring the temperature of the preset area and setting the temperature as a second detection temperature; and acquiring the second compensation coefficient according to the expected temperature and the second detection temperature.

9. The aerosol generation system of claim 8, wherein the first pre-stored parameter further comprises a third compensation coefficient, the aerosol generation system further comprises a third acquisition method for acquiring the third compensation coefficient, and the third acquisition method is used for:
recording a current time "t11", and controlling the heat module to work; when the temperature of the heating module reaches the expected temperature, recording a current time "t12"; controlling the heating module to stop working when the temperature of the heating module reaches the expected temperature; monitoring the temperature of a target area, and recording the current time "t13" when the target area reaches a maximum value; and acquiring the third compensation coefficient according to a second detection duration and a first detection duration, and the first detection duration is t12-t11, the second detection duration is t13-t11; and
the first pre-stored parameter is equal to the product of the first compensation coefficient, the second compensation coefficient and the third compensation coefficient.
